# EUROPÄISCHE PATENTSCHRIFT

(11) **EP 0 332 945 B1**
(45) Veröffentlichungstag und Bekanntmachung des Hinweises auf die Patenterteilung: **01.06.1994**
(21) Anmeldenummer: 89103694.9
(22) Anmeldetag: 02.03.1989
(51) Int. Cl.: G02B 6/44

(54) **Optisches Kabelnetz**
Optical cable network
Réseau de câbles optiques

(30) Priorität: 15.03.1988 DE 3808664
(43) Veröffentlichungstag der Anmeldung: 20.09.1989
(73) Patentinhaber: SIEMENS AKTIENGESELLSCHAFT, 80333 München (DE)
(72) Erfinder: Barwig, Karl-Horst, Dipl.-Ing., D-8036 Herrsching (DE); Klimasek, Günther, D-1000 Berlin 28 (DE); Ortkrass, Gerd, Dipl.-Ing., D-8195 Egling (DE)

(56) Entgegenhaltungen:
- EP-A- 226 805
- EP-A- 0 190 898
- EP-A- 0 257 999
- DE-A- 2 603 644
- DE-A- 3 528 246
- US-A- 4 135 202
- US-A- 4 373 776
- US-A- 4 595 255
- US-A- 4 805 979
- GLOBECOM'85, IEEE GLOBAL TELECOMMUNICATIONS CONFERENCE, New Orleans, 2.-5. Dezember 1985, vol. 3, Seiten 1185-1189, IEEE, New York, US; H. KELLER et al.: "Overlay optical-fiber local-area network"

## Beschreibung

Die Erfindung betrifft ein mit Lichtwellenleiterkabeln aufgebautes optisches Kabelnetz gemäß Oberbegriff.

Innerhalb der heutigen Kommunikationssysteme spielen lokale Netze (sogenannte LANs) eine immer größere Rolle. Dabei sind innerhalb der lokalen Netze wiederum die mit Lichtleiter aufgebauten optischen lokalen Netze von größter Bedeutung. Optische Netze weisen gegenüber elektrischen Netzen eine Vielzahl von Vorteilen auf. Unter anderem ergibt sich bei optischen Netzen wegen der kleineren Abmessungen und des niedrigeren Gewichts des Lichtwellenleiter-Kabels eine erheblich vereinfachte Kabelverlegung gegenüber einem elektrischen Netz. Dem steht als Nachteil des optischen Netzes gegenüber dem elektrischen Netz entgegen, daß ein Zusammenschalten und Verteilen von Lichtwellenleitern nicht so problemlos ist wie bei elektrischen Leitern, da jede Verbindung zwischen zwei Lichtwellenleitern zu Dämpfungsveriusten führt.

In einem optischen Kabelnetz wird durch die Ausgangsleistung des Senders und die Eingangsempfindlichkeit des Empfängers die zulässige maximale Streckendämpfung festgelegt. Unter der Streckendämpfung wird der maximale Verlust auf dem Weg zwischen Zwei beliebigen Terminals eines Übertragungssystems verstanden. Die Streckendämpfung setzt sich im wesentlichen aus der Leitungsdämpfung und den Zusatzdämpfungen zusammen. Dabei werden die Zusatzdämpfungen verursacht durch Alterung, Reparaturspleiße, optische Verteiler (Dämpfung je Verbindungsstelle 1 dB), Spleiße (0,1 - 0,2 dB) , optische Relais (Einfügungsdämpfung 1 -1,5 dB) und durch die Verkürzung der überbrückbaren Streckenlänge wegen Dispersionen im Lichtwellenleiter.

Innerhalb der heutigen optischen Kabelnetze mit einem oder mehreren Übertragungssystemen erfolgt die Verkabelung der Lichtwellenleitern fast immer unter zur Hilfenahme von LWL-Verteilern. Diese LWL-Verteiler dienen zur Verzweigung von LWL-Kabeln sowie zum problemlosen Umstecken bzw. Schalten neuer Glasfaser-Strecken oder Glasfaser-Ringen. Auch werden LWL-Verteiler sehr oft als Vorleistung für eventuelle Vergrößerungen eines optischen Netzes vorgesehen.

Geht man davon aus, daß eine Steckverbindung zwischen zwei LWL-Adern eine zusätzliche Dämpfung bis zu 1 dB verursachen kann, so sind die Nachteile von LWL-Verteilern und Steckverbindungen allgemein für den Aufbau optischer Kabelnetze offensichtlich.

Aus der EP-A-0 257 999 und der EP-A-0 190 898 sind optische Kabelnetze mit Lichtwellenleiterkabeln der im Oberbegriff genannten Art bekannt. Bei diesen Kabelnetzen ist eine Änderung der Beschaltungsart nach der Installation sehr schwierig, bzw. unmöglich. Auch können bei diesen Kabelnetzen keine Übertragungssysteme unterschiedlicher Art eingerichtet werden.

Es ist die Aufgabe der vorliegenden Erfindung, ein optisches Kabelnetz der im Oberbegriff genannten Art anzugeben, welches bei geringer Vorleistung eine leichte Installation und Erweiterbarkeit des optischen lokalen Netzes gewährleistet ohne dabei zusätzliche Dämpfungsverluste zu verursachen.

Diese Aufgabe wird erfindungsgemäß für ein optisches Kabelnetz der eingangs genannten Art gemäß dem Kennzeichen von Anspruch 1 gelöst.

Das erfindungsgemäße optische Kabelnetz läßt sich bei geringer Vorleistung leicht installieren und im Bedarfsfall auch leicht erweitern. Die Vorleistung besteht lediglich in der Verwendung eines oder mehrerer Kabel, in denen für künftige Anwendungsfälle zusätzliche LWL-Fasern vorgesehen sind und in der Bildung von Kabelreserven mittels Kabelschleifen pro vorgesehener bzw. vorhandener Anschlußdose. Da die hauptsächlichen Kosten durch die eigentliche Verlegearbeit verursacht werden, fallen hier die Mehrkosten aufgrund der zusätzlichen Fasern und der Kabelschleifen nicht ins Gewicht.

Die leichte Installation bzw. Erweiterung des erfindungsgemäßen optischen Kabelnetzes ergibt sich daraus, daß bei der Installation bzw. der Erweiterung des optischen Kabelnetzes lediglich an einer oder mehererer Anschlußdosen die entsprechenden Fasern aufgetrennt werden müssen, um anschließend die freien Enden mittels Spleißverbindungen mit den jeweiligen Anschlußvorrichtungen zu verbinden. Ein weiterer wesentlicher Vorteil des optischen Kabelnetzes gemäß der vorliegenden Erfindung besteht darin, daß die leichte Erweiterbarkeit des Netzes ohne die Verwendung von Abzweigungen bzw. optischen Verteilern als Vorleistung ermöglicht wird. Eine Erweiterung führt praktisch zu keinen zusätzlichen Dämpfungsverlusten. Daraus ergibt sich, daß bei dem erfindungsgemäßen optischen Kabelnetz gegenüber herkömmlichen Netzen größere Entfernungen überbrückt werden können.

Eine zweckmäßige Ausgestaltung des erfindungsgemäßen Netzes ist dadurch gekennzeichnet, daß die Bildung der Kabelreserve jeweils innerhalb einer Anschlußdose erfolgt, in der sich auch die für einen Anschluß notwendigen Systemkomponenten befinden.

Durch die Bildung der Kabelreserven innerhalb der Anschlußdosen, auch der zur Zeit nicht genutzten Anschlußdosen, ergibt sich ein übersichtlicher und klarer Netzaufbau.

Weitere zweckmäßige Ausgestaltungen des erfindungsgemäßen Kabelnetzes ergeben sich aus den weiteren Unteransprüchen.

Anhand eines in der Zeichnung dargestellten Ausführungsbeispiels soll das erfindungsgemäße optische Kabelnetz näher erläutert werden.

Es zeigen
- FIG 1: die schematische Darstellung eines Ausschnitts eines gemäß der Erfindung aufgebauten optischen Kabelnetzes und
- FIG 2: die perspektifische Darstellung einer in einem gemäß der Erfindung aufgebauten optischen Kabelnetzes verwendeten Anschlußdose mit einer Kabelreserve.

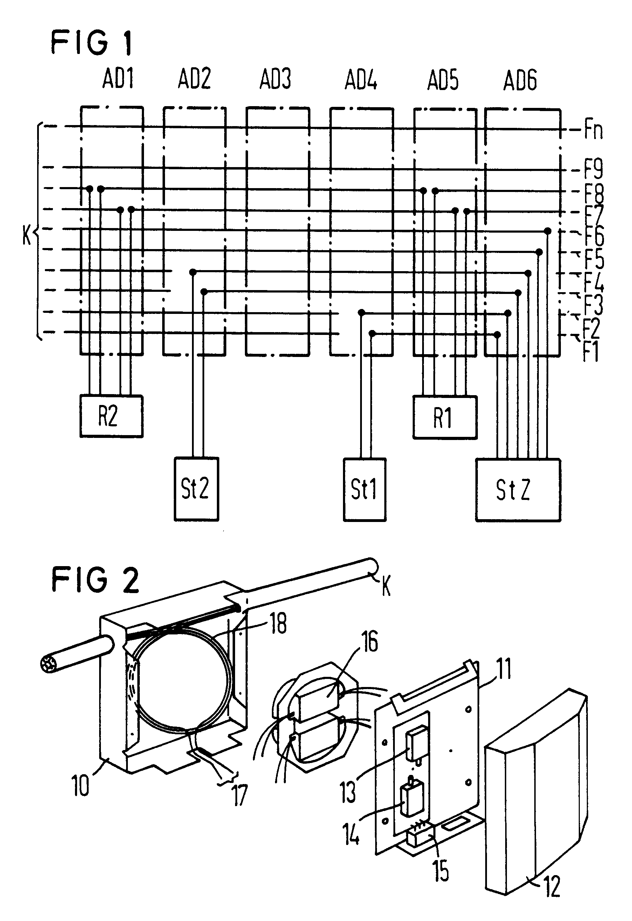

Figur 1 zeigt schematisch einen Ausschnitt eines gemäß der vorliegenden Erfindung aufgebauten optischen Kabelnetzes. Dabei sind nur die zum Verständnis der Erfindung notwendigen Teile des Netzes dargestellt. Bei dem dargestellten Ausführungsbeispiel ist ein optisches Kabelnetz vorausgesetzt, bei dem alle Anschlußpunkte, d.h. Anschlußdosen, von denen in der Figur 1 lediglich die Anschlußdosen AD1 - AD6 gezeigt sind, mittels eines Kabels K, das n-Lichtwellenleiter-Fasern F1 - Fn aufweist, verbunden. Das teilweise dargestellte optische Netz verfügt über zwei Übertragungssysteme, nämlich ein Stern- und ein Ringsystem.

Von dem sternförmigen Übertragungssystem sind in der Figur 1 die Zentrale StZ, die als aktiver optischer Stern ausgebildet sein kann, und zwei zu diesem Übertragungssystem gehörige Terminals St1 und St2 dargestellt. Diesem System sind die Anschlußdosen AD2, AD4 und AD6 zugeordnet. Damit werden von diesem System - es wird nur der dargestellte Ausschnitt betrachtet - die LWL-Fasern F1 - F6 belegt. Die Punkte in der Figur 1 bedeuten jeweils Spleiße. In diesem Zusammenhang ist zu erwähnen, daß bei dem dargestellten Ausführungsbeispiel jeweils zwei Fasern zu einer LWL-Ader zusammengefaßt sind. Da das Lichtwellenleiterkabel K alle Anschlußpunkte des optischen Kabelnetzes miteinander verbindet, ist zu erkennen, daß die gleichen Fasern entsprechend ihrer örtlichen Lage unterschiedlichen Systemen zugeordnet sein können. So können die Faserabschnitte der Fasern F1 - F4 die, ausgehend vom dargestellten Ausführungsbeispiel, links von den Terminals St1 und St2 liegen, zur Verkabelung anderer Systeme herangezogen werden, ohne daß neue Kabel installiert werden müssen.

Weiterhin ist in der Figur 1 ein Teil eines Ringsystems mit den Terminals R1 und R2 dargestellt. Diesem Ringsystem sind bei dem dargestellten Ausführungsbeispiel die Fasern F7 und F8 zugeordnet. Die Anschaltung der Terminals des Ringsystems ergibt sich aus der Figur 1. Auf technische Details der Ankopplung der Terminals soll hier nicht näher eingegangen werden, da diese nicht erfindungswesentlich sind.

Die Fasern F9 - Fn im dargestellten Ausführungsbeispiel wären dann Reservefasern, die bei einer späteren Erweiterung des optischen lokalen Netzes in Benutzung genommen würden. Da bei einem Neuaufbau eines optischen Kabelnetzes in der Regel der zukünftige maximale Ausbau abzusehen ist, ist es möglich, sofort beim Neuaufbau des Netzes die optimale Anzahl von LWL-Fasern zu verlegen.

Bei der in der Figur 1 dargestellen Anschlußdose AD3 handelt es sich um einen später einmal vorgesehenen Anschlußpunkt des optischen Kabelnetzes. Diese Anschlußdose AD3 kann dazu dienen, ein Terminal an ein beliebiges drittes Übertragungssystem, welches nicht dargestellt ist, anzuschließen. Die Anschlußdose AD3 kann aber auch dazu benutzt werden, das bestehende Ringsystem um ein Terminal zwischen den bestehenden Terminals R1 und R2 zu erweitern. Denkbar wäre auch, das dargestellte sternförmige Übertragungssystem mit Hilfe zweier Fasern der Fasern F9 - Fn um eine Station St3 über die Anschlußdose AD3 zu erweitern. Schon aus diesen wenigen Beispielen ergibt sich die enorme Flexibilität des erfindungsgemäßen optischen Kabelnetzes beim Aufbau sowie bei einer eventuellen Erweiterung.

Figur 2 zeigt die perspektifische Darstellung einer Anschlußdose AD. Innerhalb der Anschlußdose wird das Kabel K abisoliert und die einzelnen LWL-Adern in mehrfache Schleifen 18 gelegt. Soll an diese Anschlußdose ein Terminal eines Übertragungssystems angeschlossen werden, so wird lediglich die zum Systemanschluß vorgesehene Ader aufgetrennt. Die freien Enden 17 der aufgetrennten LWL-Ader werden mittels Spleißtechnik mit den Systemkomponenten verbunden. Zu diesen Systemkomponenten zählt z.B. ein optischer Sender 13 und ein optischer Empfänger 14 sowie ein LWL-Relais 16. Bei der Gestaltung optischer Ringe ist es aus Sicherheitsgründen notwendig an den Abgriffen für ein Terminal ein LWL-Relais einzufügen. Das LWL-Relais überbrückt an dieser Stelle den Ring, wenn eine am Ring angeschlossene Station defekt ist oder vom Ring getrennt werden soll. Ein Teil der Systemkomponenten ist auf einer Aufnahmeplatte 11 untergebracht, auf welcher auf entsprechende Schaltungsplatinen befestigt werden können. Mit 15 ist ein auf der Aufnahmeplatte 11 befindlicher Drop-Kabelanschluß bezeichnet. Verschlossen wird die Anschlußdose mittels einer Abdeckkappe 12.

Die Kabelschleifen 18 sind notwendig, um bei einer späteren Erweiterung des optischen lokalen Netzes an die freien Enden von aufgetrennten LWL-Fasern Spleiße anzubringen, da für den Spleißvorgang eine bestimmte Faserlänge vor und hinter dem Spleiß notwendig ist. Andererseits bedeuten diese Kabelschleifen für die durchgehenden Fasern praktisch keine zusätzliche Dämpfung.

## Patentansprüche

1. Mit Lichtwellenleitern aufgebautes optisches Kabelnetz
* mit einer Vielzahl von jeweils aus zwei Fasern (F1 bis Fn) bestehenden Lichtwellenleiter-Adern eines oder mehrerer Lichtwellenleiter-Kabel (K),
* mit einer Vielzahl von Anschlußdosen (AD1 bis AD6), wobei alle Anschlußdosen von allen Lichtwellenleiter-Adern in gleicher Reihenfolge durchlaufen werden, und wobei in jeder Anschlußdose die durchlaufenden Adern zur Bildung einer Kabelreserve (18) in mehrfache Schleifen gelegt sind, und
* mit einer Vielzahl von Systemkomponenten (13,14,16), die in Anschlußdosen angeordnet sind, zum Anschluß von Terminals, wobei in einer Anschlußdose jeweils nur die für einen Anschluß einer Systemkomponente benötigten Adern (17) aufgetrennt und mit Spleißverbindern an die Systemkomponente angeschlossen sind, und wobei die Fasern mit den Systemkomponenten des Netzes derart verschaltet sind, daß mehrere unterschiedliche Systemarchitekturen der Art von Ring-, Stern- oder Bussystemen im Netz verwirklicht sind.

2. Optisches Kabelnetz nach Anspruch 1, **dadurch gekennzeichnet**, daß die Bildung der Kabelreserve (18) jeweils innerhalb einer Anschlußdose (z.B. AD1) erfolgt, in der sich auch die für einen Anschluß notwendigen Systemkomponenten (13, 14, 16) befinden.

3. Optisches Kabelnetz nach Anspruch 2, **dadurch gekennzeichnet** daß die Anschlußdose für eine aktive Ankopplung einen Sender und einen Empfänger enthält.

4. Optisches Kabelnetz nach Anspruch 2, **dadurch gekennzeichnet**, daß die Anschlußdose zur passiven Ankopplung eine LWL-Verzweigung enthält.

## Claims

1. Optical cable network constructed from optical waveguides, having a multiplicity of optical waveguide leads, in each composed of two fibres (F1 to Fn), of one or more optical waveguide cables (K), having a multiplicity of connector boxes (AD1 to AD6), all the connector boxes of all the optical waveguide leads being run through in the same sequence, and in each connector box the leads running through being laid in multiple loops for forming a cable reserve (18), and having a multiplicity of system components (13, 14, 16), which are arranged in connector boxes, for the connection of terminals, in a connector box only the leads (17) required for a connection of a system component in each case being cut and connected by spliced joint to the system component, and the fibres being interconnected with the system components of the network in such a way that a plurality of different system architectures such as ring systems, star systems or bus systems are realised in the network.

2. Optical cable network according to Claim 1, characterized in that the forming of the cable reserve (18) takes place in each case inside a connector box (for example AD1) in which the system components (13, 14, 16) necessary for a connection are also located.

3. Optical cable network according to Claim 2, characterized in that the connector box contains for active coupling a transmitter and a receiver.

4. Optical cable network according to Claim 2, characterized in that the connector box contains for passive coupling an optical waveguide coupler.

## Revendications

1. Réseau à câbles optiques, réalisé avec des guides d'ondes lumineuses, comportant
* une multiplicité de conducteurs des guides d'ondes lumineuses, constitués chacun de deux fibres (F1 à Fn), d'un ou plusieurs câbles à guides d'ondes lumineuses (K),
* une multiplicité de prises de raccordement (AD1 à AD6), qui sont toutes traversées par tous les conducteurs des guides d'ondes lumineuses, selon la même succession et dans chacune desquelles les conducteurs traversants sont disposés selon plusieurs boucles pour former une réserve de câbles (18), et
* une multiplicité de composants (13, 14, 16) de système, qui sont disposés dans les prises de raccordement, pour le raccordement de terminaux, respectivement seuls les conducteurs (17) nécessaires pour un raccordement d'un composant du système étant séparés et raccordés par des connecteurs de jonction aux composants du système, tandis que les libres sont raccordées aux composants du système du réseau de sorte qu'on peut réaliser dans le réseau plusieurs architectures différentes du système du type système en anneau, système en étoile ou système de bus.

2. Réseau de câbles optiques suivant la revendication 1, caractérisé par le fait que la réserve de câbles (18) est réalisée respectivement à l'intérieur d'une prise de raccordement (par exemple AD1), dans laquelle sont également situés les composants (13, 14, 16) du système, qui sont nécessaires pour un raccordement.

3. Réseau de câbles optiques suivant la revendication 2, caractérisé par le fait que la prise de raccordement comporte, pour un couplage actif, un émetteur et un récepteur.

4. Réseau de câbles optiques suivant la revendication 2, caractérisé par le fait que la prise de raccordement comporte, pour le couplage passif, un embranchement pour guides d'ondes lumineuses.
